# EUROPEAN PATENT APPLICATION

(11) **EP 2 031 810 A1**
(43) Date of publication of application: **04.03.2009**
(21) Application number: 08163553.4
(22) Date of filing: 03.09.2008
(51) Int. Cl.: H04L 12/56, H04L 12/28

(54) **System and method of zigbee communication for selecting and gaining access to zigbee network**

(30) Priority: 03.09.2007 KR 20070088967
(71) Applicant: Samsung Electronics Co., Ltd., Suwon-si, Gyeonggi-Do (KR)
(72) Inventor: Kim, Jae-Ho c/o Samsung Electronics Co., Ltd., Gyeonggi-do (KR); Choi, Woo-Jun c/o Samsung Electronics Co., Ltd., Gyeonggi-do (KR); Lee, Jeong-Eun c/o Samsung Electronics Co., Ltd., Gyeonggi-do (KR); Han, Young-Seop c/o Samsung Electronics Co., Ltd., Gyeonggi-do (KR); Sim, Dae-Hyun c/o Samsung Electronics Co., Ltd., Gyeonggi-do (KR)
(74) Representative: Harrison Goddard Foote

(57) **Abstract**

A system and a method of Zigbee communication for actively selecting and accessing a Zigbee network. The Zigbee communication system includes multiple Zigbee coordinators forming multiple Zigbee networks for transmitting information on services of end-devices currently accessing each of the formed multiple Zigbee networks; and an end-device for receiving the information on the services, analyzing the received information on the services, selecting a predetermined one of the multiple Zigbee networks based on results of the analysis, and accessing the selected Zigbee network. Accordingly, the end-device can search services provided by other end-devices over a Zigbee network without gaining access to the Zigbee network, thereby reducing unnecessary resource consumption and wasted time caused by accessing and exiting each Zigbee network by a conventional end-device for service search.

## Description

### BACKGROUND OF THE INVENTION

### 1. Field of the Invention

The present invention relates to an apparatus and a method of ZIGBEE® (hereinafter "Zigbee") communication for providing information through Zigbee network. More specially, when an end-device (i.e., a terminal) capable of performing Zigbee communication is located in an area where it can gain access to multiple Zigbee networks, the end-device can select and gain access to a particular Zigbee network from among the multiple Zigbee networks. A user of an end-device scans services of end-devices already gaining access to each Zigbee network before gaining access to each Zigbee network, and then gains access to a Zigbee network to which an end-device providing a service desired by the user gains access.

### 2. Description of the Related Art

Conventionally, Zigbee communication is used as a type of a Personal Area Network (PAN). Zigbee communication is performed in a relatively narrow range, different from a Local Area Network (LAN) or Wide Area Network (WAN), and may allow each user to form a unique network.

Various end-devices capable of performing the Zigbee communication are connected to a Zigbee coordinator, and accordingly, a Zigbee network is formed by the Zigbee coordinator. As the need arises, it is possible to form a Zigbee network where multiple Zigbee routers are connected to the Zigbee coordinator as described above, and multiple end-devices are connected to each of the multiple Zigbee routers.

Before gaining access to the Zigbee coordinator, an end-device capable of performing the Zigbee communication cannot recognize any information on other end-devices which have already gained access to the Zigbee coordinator. Specifically, when a user of the end-device intends to use a service of an end-device of a particular type (e.g., a mobile communication terminal for transmitting a music file through Zigbee communication), or when there is a particular end-device (e.g., a headphone capable of performing Zigbee communication) with which a user desires to perform the Zigbee communication, before gaining access to the Zigbee coordinator, the user of the end-device or the user does not know whether the end-device of the particular type or the particular end-device is gaining access to the Zigbee coordinator.

As described above, because the relevant end-device can only search services of other end-devices accessing the Zigbee coordinator after gaining access to the Zigbee coordinator, when there is no service desired by the user after gaining access to the Zigbee coordinator, the user unnecessarily accesses the Zigbee network and wastes time and resources.

Hereinafter, problems occurring in the prior art will be described in detail with reference to the accompanying drawings. Regarding the same configuration elements in the accompanying drawings, it should be noted that the same configuration elements will be designated by the same reference numerals throughout the following description and drawings although they may be shown in different drawings.

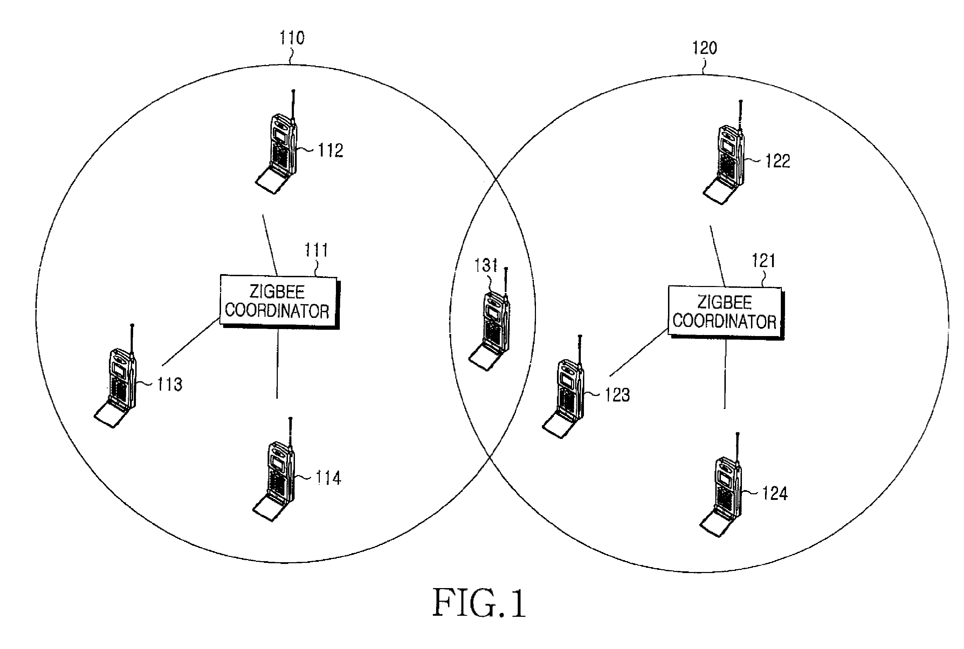

FIG. 1 illustrates multiple Zigbee networks 110 and 120 to which an end-device 131 can gain access at a particular location. When there are multiple Zigbee networks as illustrated in FIG. 1, because a user also cannot know which Zigbee coordinator 111 or 121 an end-device providing a service desired by the user gains access to, the user has no option but to randomly select an optional Zigbee network 110 or 120 to gain access to the selected Zigbee network, and then search services of other end-devices gaining access to the selected Zigbee network. Accordingly, the user cannot avoid unnecessary access and the removal of the unnecessary access to the Zigbee network, which, in turn, increases unnecessary consumption of network resources, and wastes time.

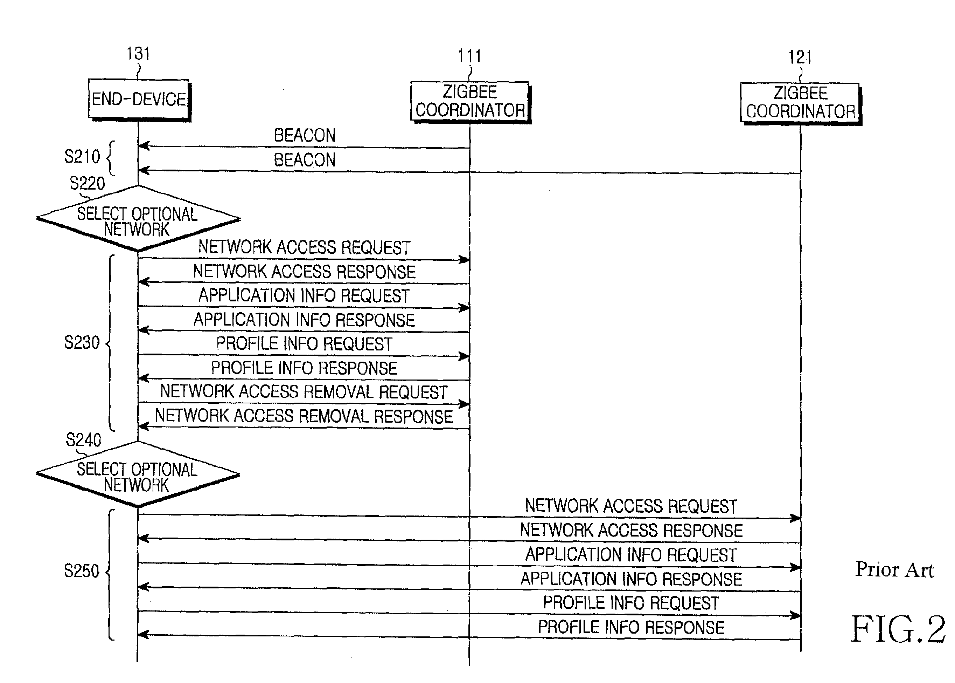

FIG. 2 is a flow diagram illustrating data flow when an end-device gains/removes access to a Zigbee network from among multiple Zigbee networks according to the prior art.

In FIG. 2, each Zigbee coordinator 111 and 121 transmits a beacon to an end-device 131 that can gain access at a current location (S210). Each of the Zigbee coordinators 111 and 121 periodically loads the beacon with several different pieces of information, which is then transmitted. The information, as described above, is basic information, such as a Personal Area Network IDentifier (PAN ID), channel information, etc. More specifically, the information identifies each Zigbee network or recognizes a channel currently used by the relevant Zigbee coordinator. Also, the information currently includes no information on services of the other end-devices 112, 113, 114, 122, 123, and 124, which have already gained access to the Zigbee coordinators 111 and 121.

The end-device 131 selects an optional Zigbee network based on the received beacons (S220). Then, the end-device 131 searches services of other end-devices 112, 113, and 114 gaining access to the selected Zigbee coordinator 111 (S230). More specifically, the end-device 131 requests network access (i.e., a network access request or a network join request) to the Zigbee coordinator 111 of the selected Zigbee network 110, and the Zigbee coordinator 111 transmits a network access response (i.e., a network join response) in response to the received network access request to the end-device 131. When the end-device 131 transmits an application information request (i.e., an active EP request) to the Zigbee coordinator 111, the Zigbee coordinator 111 transmits an application information response to the end-device 131 in response to the received application information request. The application information request and the application information response are used to search for information on application provided by each of the end-devices 112, 113, and 114.

Thereafter, the end-device 131 requests the Zigbee coordinator 111 to transmit a profile information request (i.e., a simple descriptor request), and receives a profile information response (i.e., a simple descriptor response) from the Zigbee coordinator 111. The profile information request and the profile information response are used to search for information on profile supported by each of the end-devices 112, 113, and 114.

After searching for a service of each of the end-devices 112, 113, and 114 as described above, if it is determined that there is an end-device providing a service desired by a user, the user of the end-device 131 only has to receive the desired service from the end-device. However, if it is determined that there is no end-device providing the service desired by the user, the end-device 131 requests network access removal (i.e., a network access removal request or a network access leave request) to the Zigbee coordinator 111, and receives a network access removal response (i.e., a network access leave response) from the Zigbee coordinator 111. The end-device 131 immediately selects another optional Zigbee network 120 (S240).

Thereafter, the end-device 131 repeats the process for searching services of other end-devices 122, 123, and 124 accessing the Zigbee coordinator 121 of the selected Zigbee network 120 (S250). However, in this process, specific signal transmissions and specific signal responses are the same as in S230 as described above, and as such will not be described again.

### SUMMARY OF THE INVENTION

Accordingly, the present invention has been deigned to solve the above and other problems occurring in the prior art. The present invention provides a apparatus and a method of Zigbee communication, which reduce the inconvenience of a relevant end-device needing to gain access to each Zigbee network in order to search services provided by other end-devices already accessing each Zigbee network. More specifically, the present invention provides a apparatus and a method of Zigbee communication, in which a relevant end-device can receive the information about services provided by other end-devices already accessing each Zigbee network before gaining access to each Zigbee network, so that a user of the relevant end-device can gain access to a Zigbee network desired by the user.

In accordance with an aspect of the present invention, there is provided a Zigbee communication system for selecting and accessing a Zigbee network. The Zigbee communication system includes multiple Zigbee coordinators for forming multiple Zigbee networks, and transmitting information on services of end-devices accessing each of the formed multiple Zigbee networks; and an end-device for receiving the information on the services to analyze the received information on the services, selecting one of the multiple Zigbee networks based on results of the analysis, and accessing the selected Zigbee network.

In accordance with another aspect of the present invention, there is provided a Zigbee communication method for selecting and accessing a Zigbee network. The Zigbee communication method includes searching multiple Zigbee networks for Zigbee networks to which an end-device currently gains approvable access; receiving information on services of other end-devices gaining access to each of the Zigbee networks to which the end-device currently gains approvable access; analyzing the received information on the services; selecting, based on results of the analysis, one of the Zigbee networks to which the end-device currently gains approvable access; and accessing the selected Zigbee network.

### BRIEF DESCRIPTION OF THE DRAWINGS

The above and other features, aspects, and advantages of the present invention will be more apparent from the following detailed description taken in conjunction with the accompanying drawings, in which:
FIG. 1 is a conceptual view illustrating multiple Zigbee networks and end-devices capable of gaining access to each of the multiple Zigbee networks according to the present invention;
FIG. 2 is a flow diagram illustrating data flow in a system and a method of Zigbee communication according to the prior art;
FIG. 3 is a flow diagram illustrating data flow in a system and a method of Zigbee communication capable of selecting and accessing a Zigbee network according to an exemplary embodiment of the present invention;
FIG. 4 is a block diagram illustrating a configuration of the Zigbee communication system capable of selecting and accessing a Zigbee network according to an exemplary embodiment of the present invention; and
FIG. 5 is a flowchart showing the Zigbee communication method of selecting and accessing a Zigbee network according to an exemplary embodiment of the present invention.

### DETAILED DESCRIPTION OF THE EXEMPLARY EMBODIMENTS

Hereinafter, exemplary embodiments of the present invention will be described in detail with reference to the accompanying drawings. In the accompanying drawings, the same configuration elements will be designated by the same reference numerals throughout the following description and drawings although they may be shown in different drawings. Also, in the following description of the present invention, a detailed description of known functions and configurations incorporated herein will be omitted when it may obscure the subject matter of the present invention.

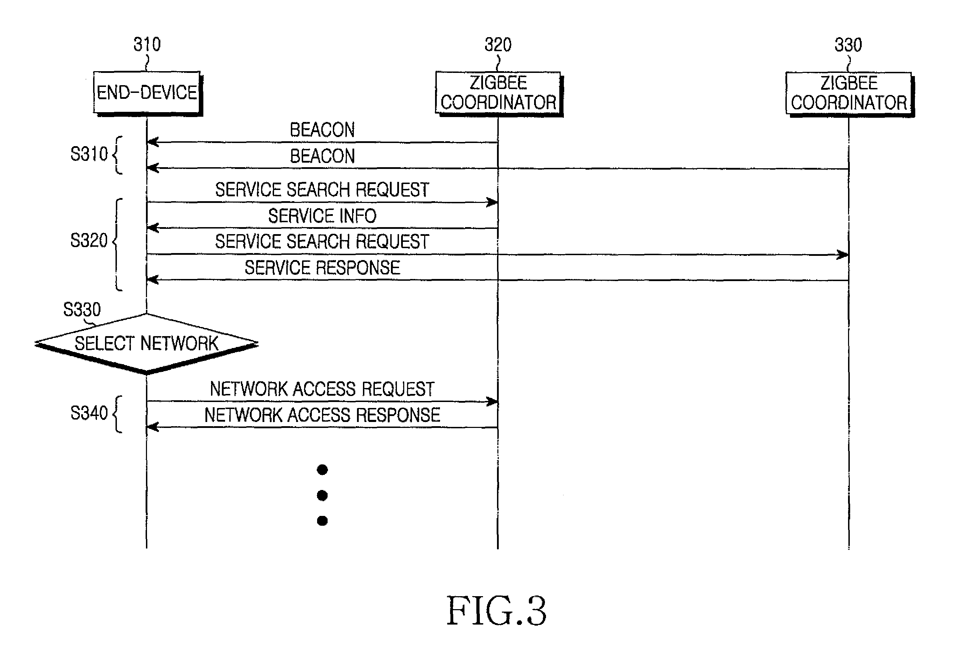

FIG. 3 is a flow diagram illustrating data flow in a system and a method of Zigbee communication capable of selecting and accessing a Zigbee network according to an exemplary embodiment of the present invention. More specifically, FIG. 3 illustrates data flow between an end-device 310 and a first Zigbee coordinator 320 according to the present invention and data flow between the end-device 310 and a second Zigbee coordinator 330 according to the present invention.

First, when the first and second Zigbee coordinators 320 and 330 transmit first and second beacons, respectively, the end-device 310 receives the first and second beacons (S310). By receiving the first and second beacons, the end-device 310 can search all Zigbee networks to which it can gain access at a current location. In this process, the present invention is different from the prior art. More specifically, from S210 as illustrated in FIG. 2 according to the prior art, it can be noted that each of the Zigbee coordinators 111 and 121 loads a beacon with only basic information (such as a PAN ID, channel information, etc.), and transmits the beacon loaded with only the basic information. However, each of the Zigbee coordinators 320 and 330 according to the present invention loads a beacon with a PAN ID and also information on services of other end-devices already gaining access to each of the Zigbee coordinators 320 and 330, and transmits the beacon loaded with the PAN ID and also the information on the services of the other end-devices.

In the present invention, an identifier is separately determined to be information on a service, especially for a type of the service of each of end-devices, and the separately determined identifier is then used. Preferably, this identifier is mutually agreed information for each type of device, such as a mobile communication terminal, a headphone, an audio playback device, and the like. Accordingly, if the end-device 310 has only to receive a beacon, it can recognize which end-devices gain access to each of the Zigbee coordinators 320 and 330 transmitting the relevant beacon, and which service is provided by each of the end-devices.

Herein, the identifier as described above can be included in either a reserved field in a superframe specification field of the beacon or a reserved field in a beacon payload.

By using only information on the identifier, the end-device 310 searches services of end-devices already accessing the Zigbee networks for a desired service, and can then gain access to a Zigbee network to which an end-device providing the desired service has already accessed. Nevertheless, the information on the identifier is just very simple information, and thus does not have to be detailed information. However, when multiple end-devices have their own equal identifiers, more detailed information is necessary. Accordingly, in the present invention, a process where services can be searched in detail before gaining access to a Zigbee network is added as step S320.

First, the end-device 310 requests service search (i.e., a service search request) from each of the Zigbee coordinators 320 and 330 transmitting the beacon, and receives service information from each of the Zigbee coordinators 320 and 330. The service information as described above is more specific and more detailed information on each service. Accordingly, with only the detailed information, the end-device 310 can immediately search for an end-device providing a desired service. The detailed information is converted into a data packet and is generated as the data packet, according to IEEE 802.15.4 corresponding to a Zigbee communication protocol, which is then exchanged as a signal. Accordingly, a user of the end-device 310 can select a Zigbee network to which an end-device providing the desired service is accessing (S330).

Thereafter, the end-device 310 accesses the selected Zigbee network according to an existing protocol (S340). Accordingly, the end-device 310 can search for the Zigbee network providing the desired service at one time, and can then access the Zigbee network providing the desired service, which does not require unnecessary access to Zigbee networks and the removal of the unnecessary access as described in the prior art.

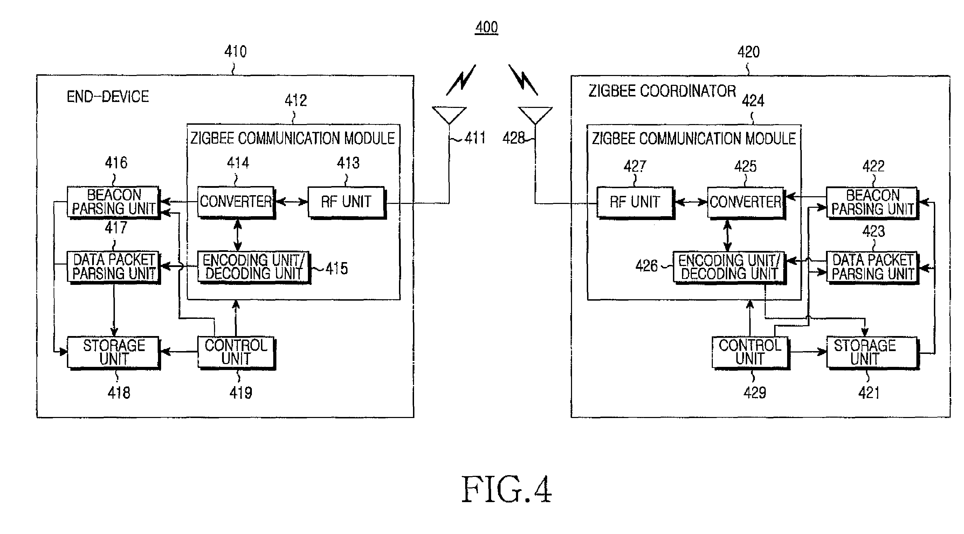

FIG. 4 is a block diagram illustrating a Zigbee communication system capable of selecting and accessing a Zigbee network according to an exemplary embodiment of the present invention. More specifically, FIG. 4 illustrates the connection relation among configuration units is illustrated.

Referring to FIG. 4, the Zigbee communication system 400 according to the present invention includes an end-device 410 and a Zigbee coordinator 420. The Zigbee coordinator 420 includes a storage unit 421, a beacon generation unit 422, a data packet generation unit 423, a Zigbee communication module 424, an antenna 428, and a control unit 429. The storage unit 421 stores identifiers and detailed information on each service therein. Also, the storage unit 421 stores PAN IDs and channel information. The storage unit 421 receives information from each of the end-devices previously gaining access to the Zigbee coordinator 420, and stores the received information therein.

The identifier, as described above, is information on each service, and in the present invention, an identifier is separately determined especially for a type of the service of each of end-devices, and the separately determined identifier is then used. Preferably, the identifier is mutually agreed information for each type of device, such as a mobile communication terminal, a headphone, an audio playback device, etc. Also, detailed information informs the end-device 410 of a type of service in more detail, and enables a user to search for and access a Zigbee network providing a desired service.

The beacon generation unit 422 generates a beacon by using a PAN ID, channel information, and an identifier stored in the storage unit 421. Conventionally, a beacon includes a PAN ID and channel information. However, with only the PAN ID and the channel information, the end-device 410 must search for a Zigbee network to which the end-device 410 can access. Therefore, in the present invention, the beacon generation unit 422 includes an identifier in a beacon, and then generates the beacon including the identifier. Accordingly, the end-device 410 receiving the beacon can recognize which services are provided over each Zigbee network. The identifier as described above can be included in either a reserved field in a superframe specification field of the beacon or a reserved field in a beacon payload. Also, when the beacon generation unit 422 generates a beacon including an identifier, the generated beacon may further include information indicating whether the beacon includes the identifier. In this case, the information indicating whether the beacon includes the identifier may be equally included in a field including the identifier, or be separately defined and included in a particular field. However, the identifier may be very simple information, and thus does not need to be detailed information. However, when multiple end-devices have their own equal identifiers, more detailed information is necessary.

The data packet generation unit 423 generates a data packet suitable for Zigbee communication by using detailed information stored in the storage unit 421. The data packet is generated in such a manner that it may coincide with an IEEE 802.15.4 Medium Access Control (MAC) standard. The beacon generated by the beacon generation unit 422 is converted from a digital signal to an analog signal by a converter 425. Then, the analog signal is transmitted to the end-device 410 through a Radio Frequency (RF) unit 427 and an antenna 428. At this time, the beacon may be transmitted periodically.

The beacon generated by the beacon generation unit 422 may include a relatively small amount of data. However, because the amount of data generated by the data packet generation unit 423 increases as the number of end-devices gaining access to a Zigbee network increases, it may become necessary to encode by an encoding unit/decoding unit 426 as the need arises. Accordingly, a digital signal of detailed information encoded by the encoding unit/decoding unit 426 is converted into an analog signal by the converter 425, and then the analog signal is transmitted to the end-device 410 through the RF unit 427 and the antenna 428.

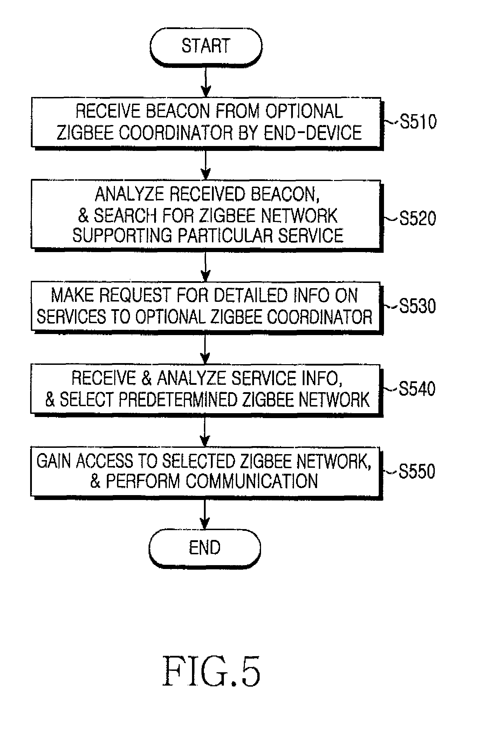

Among the configuration units as described above, the Zigbee communication module 424, the storage unit 421, the antenna 428, etc., perform normal Zigbee communication. The control unit 429 controls the configuration units described above so that they can perform their own operations as illustrated in FIGs. 3 and 5.

The end-device 410 includes an antenna 411, a Zigbee communication module 412, a beacon parsing unit 416, a data packet parsing unit 417, a storage unit 418, and a control unit 419. The end-device 410 receives, through the antenna 411, a beacon and detailed information transmitted by the Zigbee coordinator 420 and data exchanged by Zigbee communication.

First, the beacon received through the antenna 411, the RF unit 413 and a converter 414 is parsed by the beacon parsing unit 416, so that a PAN ID, channel information, and an identifier included in the beacon are identified and then analyzed. Because the identifier is information agreed between the end-device 410 and the Zigbee coordinator 420, with only the identifier, the end-device 410 can roughly recognize which end-devices gain access to the Zigbee coordinator 420, and which types of services are provided by the end-devices. It is possible to allow the PAN ID, the channel information, and the identifier to be stored in the storage unit 418.

The beacon parsing unit 416 parses a beacon to identify an identifier and also a PAN ID and channel information, so that the identifier, PAN ID and channel information can be used when the end-device 410 accesses a Zigbee network.

After receiving the beacon and parsing the received beacon, the end-device 410 requests detailed information on services to each of all Zigbee coordinators (e.g., the Zigbee coordinator 420) transmitting a beacon, and receives the detailed information. The detailed information is transmitted as a data packet converted according to the IEEE 802.15.4 standard. The detailed information transmitted as the data packet is converted from an analog signal to a digital signal while passing through the antenna 411, the RF unit 413, and the converter 414. When the detailed information transmitted as the data packet is an encoded signal, it is decoded by an encoding unit/decoding unit 415. Then, the data packet parsing unit 417 analyzes the data packet according to the IEEE 802.15.4 standard, thereby obtaining detailed information.

It is also possible for the detailed information to be stored in the storage unit 418. By using a Pan ID, channel information, an identifier, and detailed information stored in the storage unit 418, the end-device 410 can search for a Zigbee network providing a service desired by the user of the end-device 410 at one time, and can then access it.

Among the configuration units as described above, the Zigbee communication module 412, the storage unit 418, the antenna 411, etc., perform normal Zigbee communication.

The control unit 419 controls the configuration units as described above so that they can perform the processes as illustrated in FIGs. 3 and 5.

FIG. 5 is a flowchart illustrating the Zigbee communication method capable of selecting and accessing a Zigbee network according to an exemplary embodiment of the present invention.
referring to FIG. 5, the end-device 410 receives a beacon from an optional Zigbee coordinator 420 in step S510. The beacon is used to search for a Zigbee coordinator to which the end-device 410 access at a current location, and includes a PAN ID, channel information, and an identifier. The identifier is information on types of services, which can be provided by the Zigbee coordinator 420, which has transmitted the beacon. Accordingly, the end-device 410 can roughly recognize the service information.

The end-device 410 analyzes the received beacon, and searches for a Zigbee network supporting a particular service desired by a user of the end-device 410 in step S520.

The end-device 410 requests detailed information on services from all Zigbee coordinators (e.g., the Zigbee coordinator 420) to which the end-device 410 can access in step S530. The detailed information on the services is specific information on services, and accordingly, the end-device 410 can search for a Zigbee network providing a service desired by the user by using the detailed information.

The end-device 410 receives the detailed information on each service from each of all of the Zigbee coordinators to which the end-device 410 can gain access, analyzes the received detailed information on each service, and then selects a predetermined Zigbee network in step S540.

Thereafter, the end-device 410 requests access to the selected Zigbee network 420, accesses the selected Zigbee network 420, and then performs Zigbee communication in step S550.

As described above, according to the system and the method of the present invention, an end-device can search services provided by other end-devices over a Zigbee network without first accessing the Zigbee network. As a result, the system and the method of the present invention can reduce unnecessary consumption of network resources and a waste of time caused by accessing and exiting each Zigbee network by an end-device in order to search for services as in the prior art.

While the present invention has been shown and described with reference to certain exemplary embodiments thereof, it will be understood by those skilled in the art that various changes in form and details may be made therein without departing from the spirit and scope of the present invention. Therefore, the present invention must be defined not by described embodiments thereof but by the appended claims and equivalents of the appended claims.

## Claims

1. A Zigbee communication apparatus for allowing any of multiple end-devices to select and connect to any of one or more coordinators and then receive service information on a Zigbee network formed by the multiple end-devices and the one or more coordinators, the Zigbee communication apparatus comprising:
a beacon generation unit for generating a beacon frame, wherein the beacon frame includes a beacon payload including service type information of the connected end-devices and a header including a length value of the beacon payload, and is used to provide service information of the end-devices connected to the Zigbee network;
a data packet generation unit for generating a data packet according to a Zigbee communication protocol;
a Zigbee communication module for performing Zigbee communication by using the beacon and the data packet; and
a control unit for controlling configuration units so that the Zigbee communication module performs the Zigbee communication by using the beacon and the data packet.

2. The Zigbee communication apparatus of claim 1, wherein the Zigbee communication apparatus corresponds to a Zigbee coordinator.

3. The Zigbee communication apparatus of one of claim 1 to 2, wherein the service information corresponds to application service data provided by each of the end-devices when a service provided by each of the end-devices connected to the Zigbee network correspond to a service, such as a music file sharing service and a business card exchange service.

4. The Zigbee communication apparatus of one of claim 1 to 3, wherein the service information corresponds to an identifier representing the previously-set service information, and information on the identifier is previously shared by the end-devices on the Zigbee network, and wherein the information on the identifier has a different value depending on a type of each of the end-devices connected to the Zigbee network and a type of a service provided by each of the end-devices.

5. The Zigbee communication apparatus of one of claim 1 to 4, wherein the identifier is included in either a reserved field in a superframe specification field of the beacon or a reserved field in the beacon payload.

6. The Zigbee communication apparatus of one of claim 1 to 5, wherein the control unit controls the Zigbee communication module so as to periodically broadcast the beacon frame, or so as to transmit the beacon frame to a particular end-device in response to a request of the particular end-device.

7. The Zigbee communication apparatus of one of claim 1 to 6, wherein, according to the Zigbee communication protocol, the data packet generation unit generates a data packet including detailed information on the services provided by the end-devices connected to each of the multiple Zigbee networks, and wherein, after the identifier is transmitted being included in the beacon, the detailed information on the services is transmitted from the Zigbee coordinator to the end-device in response to a request of the end-device.

8. The Zigbee communication apparatus of one of claim 1 to 7, wherein the detailed information on the services is transmitted as a Medium Access Control (MAC) data packet according to an Institute of Electrical and Electronics Engineers (IEEE) 802.15.4 standard.

9. The Zigbee communication apparatus of one of claim 1 to 8, wherein the Zigbee communication apparatus further comprises a storage unit for storing therein the identifiers and the detailed information on the services; and wherein the control unit controls the beacon generation unit so as to generate the beacon from the identifier stored in the storage unit, and controls the data packet generation unit so as to generate the data packet from the detailed information on the services stored in the storage unit.

10. The Zigbee communication apparatus of one of claim 1 to 9, wherein the beacon generation unit generates a beacon further including information indicating whether the beacon includes the identifier.

11. A Zigbee communication method for allowing any of multiple end-devices to select and connect to any of one or more coordinators and then receive service information on a Zigbee network formed by the multiple end-devices and the one or more coordinators, the Zigbee communication method comprising the steps of:
receiving information on services from the end-devices connected to the Zigbee network by the coordinator;
generating a beacon including the received information on the services of the end-devices connected to the Zigbee network by the coordinator; and
broadcasting the generated beacon by the coordinator.

12. The Zigbee communication method of claim 11, wherein the service information corresponds to an identifier representing the previously-set service information, and information on the identifier is previously shared by the end-devices on the Zigbee network, and wherein the information on the identifier has a different value depending on a type of each of the end-devices connected to the Zigbee network and a type of a service provided by each of the end-devices.

13. The Zigbee communication method of one of claim 11 to 12, wherein the identifier is included in either a reserved field in a superframe specification field of the beacon or a reserved field in the beacon payload.

14. The Zigbee communication method of one of claim 11 to 13, further comprising the steps of:
generating a data packet including detailed information on the services provided by the end-devices connected to the Zigbee network in response to a request of an end-device receiving the beacon; and
transmitting the generated data packet to the end-device making the request.

15. The Zigbee communication method of one of claim 11 to 14, wherein, in the step of generating a beacon including the received information, the beacon is generated so as to further include information indicating whether the beacon includes the identifier.
